Europäisches Patentamt

(19) European Patent Office

Office européen des brevets

(11) Publication number: **0 048 065**
**B1**

# EUROPEAN PATENT SPECIFICATION

(45) Date of publication of patent specification: **01.08.84**

(51) Int. Cl.³: **F 16 L 59/16, B 29 C 27/06**

(21) Application number: **81201011.4**

(22) Date of filing: **10.09.81**

(54) Adhesively joined pipe connection and a female pipe part suitable for this connection.

(30) Priority: **15.09.80 NL 8005161**

(43) Date of publication of application:
**24.03.82 Bulletin 82/12**

(45) Publication of the grant of the patent:
**01.08.84 Bulletin 84/31**

(84) Designated Contracting States:
**AT BE CH DE FR GB IT LI LU NL SE**

(56) References cited:
**EP - A - 0 017 254**
**GB - A - 1 222 246**
**GB - A - 1 293 371**
**GB - A - 1 337 394**
**US - A - 3 235 289**
**US - A - 3 402 731**
**US - A - 3 663 335**
**US - A - 3 854 756**

(73) Proprietor: **WAVIN B.V.**
**Händellaan 251**
**NL-8031 EM Zwolle (NL)**

(72) Inventor: **Steenbergen, Johannes Femminus**
**3 Koolmeesstraat**
**NL-7731 XK Ommen (NL)**

(74) Representative: **van der Veken, Johannes Adriaan et al,**
**EXTERPATENT Willem Witsenplein 4**
**NL-2596 BK 's-Gravenhage (NL)**

Courier Press, Leamington Spa, England.

## Description

The invention relates to a plastic pipe connection, comprising a female pipe part and a male pipe part of fibre reinforced thermosetting plastics, secured together by means of a thermosetting adhesive, at least said female part having a thermally insulating foam plastic layer on its male-part receiving portion.

Such a pipe connection is known from US—A—3.402.731.

This pipe connection presents the disadvantage that in order to obtain a reliable tensile resistant pipe connection it is necessary to cure the thermosetting adhesive by heat as otherwise long periods are necessary for curing the thermosetting adhesive.

However, an uncontrolled supply of heat may easily involve decomposition of the thermally insulating foam plastic layer.

Thus it is impossible to use a heatable element for applying heat to a thermosetting adhesive as used for forming a pipe connection of a male and female pipe part of fiber reinforced thermosetting plastics as shown in US—A—3.663.335 as the heatable element consists of a pad of insulating inorganic material heated by the combustion of fuel board and being surrounded by an aluminium foil transferring heat to the outside of the pad. Moreover a careful control of the amount of heat supplied by the combustion of a fuel board is impossible.

It is now the aim of the invention to provide a plastic pipe connection which does not present this disadvantage.

According to the invention this aim is attained in that an electrically heatable foil element covered by the insulating layer is provided on the outer wall surface of the receiving portion.

By using an electrically heatable foil element a carefully controlled amount a heat can be applied to the thermosetting adhesive without decomposition of the thermally insulating foam plastic layer.

It should be noted that the use of an electrically heatable resistance heating tape covered by an insulating foam plastic layer and provided on the outer wall surface of a pipe portion is known per se from GB—A—1.222.246, but this heating tape as used for heating liquids to be conveyed through metal pipes engages a metal pipe so that the heat evolved by the tape is immediately absorbed by the metal pipe and thus the foam plastics layer cannot be deteriorated or be decomposed.

The heatable foil element is very advantageously a resistance foil element. Resistance foil elements of this kind present the advantage of being flexible, simple in construction and also very cheap.

Advantageously, the heatable element is connected to the female pipe part by means of an adhesive, so that the heating element cannot readily be pulled out of a insulated female pipe part during transport of the latter.

The female and male pipe parts for the connection are advantageously made from fibre reinforced thermosetting plastics, e.g. polyester resins or epoxy resins.

To enable the heatable element to be readily heated, connecting wires connected to the heatable element extend through the thermally insulating layer. The heatable element can in this way be heated by means of an electrical source and the thermosetting adhesive can be rapidly set so that a very excellent adhesive connection is obtained rapidly and very simple in this manner.

Examples of female pipe parts may be plastics sleeves, bends, T-pieces, transition parts and the like.

The invention relates to a female pipe part suitable for a pipe connection in which a female pipe part and male pipe are interconnected by the use of a thermosetting adhesive according to the invention said female pipe part having a thermally insulation foam plastics layer at least on its male-part receiving portion being characterized in that an electrically heatable foil element covered by the insulating layer is provided on the outer wall surface of said receiving portion.

Advantageously, a resistance foil element is connected to the female pipe part by means of an adhesive, and connecting wires connected to the foil element advantageously extend outwardly through the thermally insulating layer.

The invention will now be explained with reference to an embodiment by means of the drawings wherein:

Fig. 1 is a longitudinal section through a pipe connection according to the invention.

Fig. 2 is a section according to the line II—II.

Fig. 3 is a female T-pipe part according to the invention.

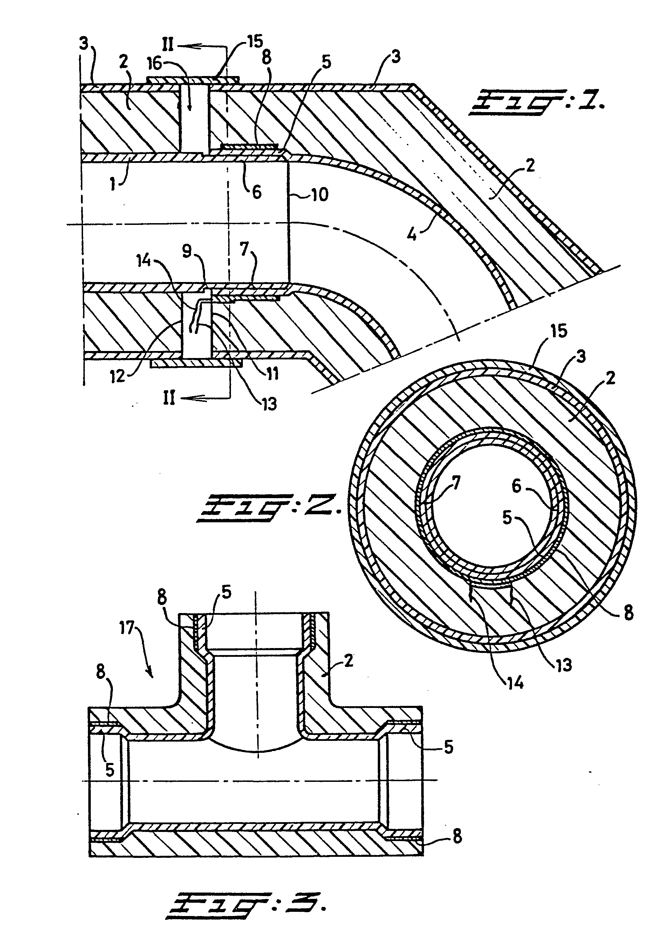

Fig. 1 shows a male pipe part 1 of glass fibre reinforced thermosetting resin, e.g. an epoxy or polyester resin. The male pipe part is provided with a thermally insulating layer 2 of organic foam material in the form of a polyurethane foam material.

To avoid any damage to the thermally insulating foam layer 2, the outside of the foam layer has a tubular casing 3 of polyethylene.

The figure further shows a female pipe part 4 (e.g. a bend) also of glass fibre reinforced thermosetting resin, such as polyester or epoxy resin, with a receiving end portion 5. A layer 7 of thermosetting adhesive is provided between the inner wall of the receiving portion 5 and the outside of the male pipe part 1, said layer having been set by heating.

To this end, a resistance foil 8 secured by means of an adhesive, is provided directly on the outside of the receiving portion 5 of the female pipe part 4.

A suitable resistance foil is the one marketed by Kanthal.

To obtain a good thermal insulation, a thermally insulating layer 2 is also provided on the outside of the female pipe part 4, layer 2 extending substantially to the free end 9 of the female pipe part 4.

The thermally insulating plastics foam layer on the male pipe part 1 terminates at some distance from the head end 10 of the male pipe part 1. In the finished adhesively joined pipe connection, however, the front surface 11 of the plastic foam insulating layer 2 on the female pipe part 4 may practically adjoin the front end 12 of the plastic foam layer 2 on the male pipe part 1.

The outer side of the insulating layer 2 on the female pipe part 4 is also provided with a tubular casing 3 of polyethylene material.

The resistance foil element 8 is connected to connecting wires 13 and 14 which may be connected to an electrical source to generate heat in the heating resistance foil element.

After the finished adhesively joined connection has been made, the space 16 between the front ends 11 and 12 of the thermally insulating layers 2 on the female pipe part 4 and the male pipe part 1 can be filled with foam.

Although filling this space 16 with foam can be omitted it is recommended to fill this space with a foam plastic material for the purposes of flexural rigidity. If these spaces are not filled with foam they may form pivots in the complete pipeline, which may be disadvantageous.

In any case, a polyethylene covering sleeve 15 is heat shrunk upon the outer side in order to provide a good sealing of space 16.

The ends of the connecting wires 13 and 14 are also accommodated in this space.

Fig. 3 shows a female pipe part in the form of a T-piece 17 with a thermally insulating layer 2 on its outer side. Layer 2 consists of polyurethane foam, and the same holds for the thermally insulating layer 2 on the male pipe part 1.

The T-piece 17 is also provided with a receiving portion 5 having on its outer side a resistance foil element 8, said element 8 in turn being covered by the thermally insulating layer 2.

Said thermally insulating layer 2, is also surrounded by a polyethylene tubular casing 3.

## Claims

1. A plastic pipe connection, comprising a female pipe part and male pipe part, of fibre reinforced thermosetting plastics, secured together by means of a thermosetting adhesive, at least said female part (4) having a thermally insulating foam plastic layer (2) on its male-part receiving portion (5), characterized in that an electrically heatable foil element (8) covered by the insulating layer (2) is provided on the outer wall surface of the receiving portion (5).

2. A pipe connection according to claim 1, characterized in that the heatable foil element (8) is a resistance foil element.

3. A pipe connection according to claims 1 or 2, characterized in that the heatable element (8) is connected to the female pipe part (4) by means of an adhesive.

4. A pipe connection according to claims 1 to 3, characterized in that the connecting wires (13, 14) connected to the heatable element (8) extend through the thermally insulating layer (2).

5. A pipe connection according to any one or more of the preceding claims, characterized in that the outer side of the thermally insulating layer is surrounded by a protective tubular casing (3).

6. A pipe connection according to any one or more of the preceding claims, characterized in that the ends of a protective tubular casing (3) of a male and a female pipe part (1, 4) sealingly engage a covering sleeve (15).

7. A female pipe part suitable for a pipe connection, in which a female pipe part and male pipe part are interconnected by the use of a thermosetting adhesive, according to claims 1 to 6, said female pipe part (4) having a thermally insulating foam plastics layer (2) at least on its male-part receiving portion (5), characterized in that an electrically heatable foil element (8) covered by the insulating layer (2) is provided on the outer wall surface of said receiving portion (5).

8. A female pipe part according to claim 7, characterized in that a resistance foil element (8) is connected to the female pipe part (4) by means of an adhesive.

9. A female pipe part according to claims 7 or 8, characterized in that the foil element (8) is connected to connecting wires (13, 14) extending outwardly through the thermally insulating layer (2).

### Patentansprüche

1. Kunststoffrohrverbindung mit einem Aufnahmerohrteil und einem Einsteckrohrteil aus faserverstärktem, wärmehärtbarem Kunststoff, die durch einen wärmehärtbaren Klebstoff miteinander verbunden sind, wobei zumindest das Aufnahmeteil (4) eine wärmedämmende Schaumstoffschicht (2) auf seinem den Einsteckteil aufnehmenden Bereich (5) aufweist, dadurch gekennzeichnet, daß ein von der Dämmschicht (2) abgedecktes, elektrisch heizbares Folienelement (8) auf der äußeren Wandfläche des Aufnahmebereichs (5) vorgesehen ist.

2. Rohrverbindung nach Anspruch 1, dadurch gekennzeichnet, daß das heizbare Folienelement (8) aus einem Widerstandsfolienelement besteht.

3. Rohrverbindung nach Anspruch 1 oder 2, dadurch gekennzeichnet, daß das Heizelement (8) durch einen Klebstoff mit dem Aufnahmerohrteil (4) verbunden ist.

4. Rohrverbindung nach den Ansprüchen 1 bis 3, dadurch gekennzeichnet, daß mit dem Heizelement (8) verbundene Anschluß-drähte (13, 14) sich durch die Wärmedämmschicht (2) hindurcherstrecken.

5. Rohrverbindung nach einem oder mehreren der vorhergehenden Ansprüche, dadurch gekennzeichnet, daß die Außenseite der Wärmedämmschicht von einem rohrförmigen Schutzmantel (3) umgeben ist.

6. Rohrverbindung nach einem oder mehreren der vorhergehenden Ansprüche, dadurch gekennzeichnet, daß die Enden des rohrförmigen Schutzmantels (3) eines Einsteck- und eines Aufnahmerohrteils (1, 4) mit einer Abdeckhülse (15) in Abdichteingriff stehen.

7. Aufnahmerohrteil für eine Rohrverbindung, bei der ein Aufnahmerohrteil und ein Einsteckrohrteil durch die Verwendung eines wärmehärtbaren Klebstoffs miteinander verbunden sind, nach den Ansprüchen 1 bis 6, wobei das Aufnahmerohrteil (4) zumindest auf seinem das Einsteckteil aufnehmenden Bereich (5) eine wärmedämmende Schaumstoffschicht (2) aufweist, dadurch gekennzeichnet, daß ein von der Dämmschicht (2) abgedecktes, elektrisch heizbares Folienelement (8) auf der äußeren Wandfläche des Aufnahmebereichs (5) vorgesehen ist.

8. Aufnahmerohrteil nach Anspruch 7, dadurch gekennzeichnet, daß ein Widerstandsfolienelement (8) mittels eines Klebstoffs mit dem Aufnahmerohrteil (4) verbunden ist.

9. Aufnahmerohrteil nach Anspruch 7 oder 8, dadurch gekennzeichnet, daß das Folienelement (8) mit Anschlußdrähten (13, 14) verbunden ist, die sich nach außen durch die Wärmedämmschicht (2) hindurcherstrecken.

**Revendications**

1. Raccord du tuyaux en matière plastique, comprenant un élément de tuyau femelle et un élément de tuyau mâle, en matière plastique thermodurcissable armée de fibres, réunis par une adhésif thermodurcissable, au moins l'élément femelle (4) comprenant une couche de mousse plastique isolante (2) sur sa portion (5) de réception de l'élément mâle, caractérisé en ce qu'un élément en feuille (8) apte à être chauffé électriquement et recouvert de la couche isolante (2) est prévu sur la surface de paroi extérieure de la portion de réception (5).

2. Raccord de tuyaux selon la revendication 1, caractérisé en ce que l'élément en feuille apte à être chauffé (8) est un élément en feuille à résistance.

3. Raccord de tuyaux selon les revendications 1 ou 2, caractérisé en ce que l'élément apte à être chauffé (8) est réuni avec l'élément du tuyau femelle (4) à l'aide d'un adhésif.

4. Raccord de tuyaux selon les revendications 1 à 3, caractérisé en ce que des fils de liaison (13, 14) raccordés à l'élément apte à être chauffé (8) traversent la couche thermiquement isolante (2).

5. Raccord de tuyaux selon une ou plusieurs des revendications précédentes, caractérisé en ce que le côté extérieur de la couche thermiquement isolante est entouré d'une enveloppe tubulaire protectrice (3).

6. Raccord de tuyaux selon une ou plusieurs des revendications précédentes, caractérisé en ce que les extrémités d'une enveloppe tubulaire protectrice (3) d'un élément de tuyau mâle et femelle (1, 4) sont en contact étanche avec un manchon de recouvrement (15).

7. Elément du tuyau femelle convenant à une raccord de tuyaux, dans lequel un élément de tuyau femelle et une élément de tuyau mâle sont rendus solidaires l'un de l'autre à l'aide d'un adhésif thermodurcissable, selon les revendications 1 à 6, ledit élément de tuyau femelle (4) comprenant une couche de mousse plastique isolante (2) au moins sur sa portion de réception (5) de l'élément mâle, caractérisé en ce qu'un élément en feuille apte à être chauffé électriquement (8) recouvert par la couche isolante (2) est prévu sur la surface de paroi extérieure de ladite portion de récepion (5).

8. Elément de tuyau femelle selon la revendication 7, caractérisé en ce qu'un élément en feuille à résistance (8) est rendu solidaire de l'élément de tuyau femelle (4) à l'aide d'un adhésif.

9. Elément de tuyau femelle selon les revendications 7 ou 8, caractérisé en ce que l'élément en feuille (8) est relié à des fils de liaison (13, 14) s'étendant vers l'extérieur et traversant la couche thermiquement isolante (2).

0 048 065

FIG:1.

FIG:2.

FIG:3.

1